# EUROPEAN PATENT APPLICATION

(11) **EP 4 207 007 A1**
(43) Date of publication of application: **05.07.2023**
(21) Application number: 20951585.7
(22) Date of filing: 31.08.2020
(51) Int. Cl.: G06N 20/00

(54) **DATA GENERATION PROGRAM, METHOD AND DEVICE**

(71) Applicant: FUJITSU LIMITED, Kawasaki-shi, Kanagawa 211-8588 (JP)
(72) Inventor: SHINGU, Masafumi, Kawasaki-shi, Kanagawa 211-8588 (JP)
(74) Representative: Hoffmann Eitle
(86) International application number: PCT/JP2020/032948
(87) International publication number: WO 2022/044336

(57) **Abstract**

A data generation program causes a computer to execute processing of: obtaining data including a plurality of nodes and a plurality of edges connecting the plurality of nodes; selecting a first edge from the plurality of edges; and generating new data having a second connection relationship between the plurality of nodes different from a first connection relationship between the plurality of nodes of the data by changing connection of the first edge such that a third node connected to at least one of a first node and a second node located at both ends of the first edge via a number of edges, the number being equal to or less than a threshold, is located at one end of the first edge.

## Description

### FIELD

The present invention relates to a data generation technique.

### BACKGROUND

While high-performance classifiers have been obtained with the progress of machine learning, there is an aspect that it is becoming difficult for humans to verify reasons and grounds for obtaining classification results. In one aspect, it can hinder application of a machine learning model in which machine learning such as deep learning is executed to mission-critical areas where accountability for results is required.

For example, as an example of a technique that explains the reasons and grounds for obtaining classification results, an algorithm called local interpretable model-agnostic explanations (LIME), which is independent of formats of machine learning models and data, and structures of the machine learning models, has been proposed.

In LIME, when explaining a classification result output by a machine learning model f to which data x is input, a linear regression model g whose output locally approximates the output of the machine learning model f in the vicinity of the data x is generated as an interpretable model for the machine learning model f. Neighborhood data z obtained by varying part of a feature amount of the data x is used to generate such a linear regression model g.

### TECHNICAL PROBLEM

However, the above-described LIME only supports data in formats such as tables, images, and texts as data formats that can generate neighborhood data. Therefore, in a case of generating neighborhood data of graph data, neighborhood data with an impaired feature of the original graph data is sometimes generated. Even with such neighborhood data, it is difficult to generate a linear regression model, which hinders application of LIME to a machine learning model using graph data as input.

In one aspect, an object is to provide a data generation program, a data generation method, and a data generation device capable of reducing generation of neighborhood data with an impaired feature of original graph data.

### SOLUTION TO PROBLEM

According to an aspect, a data generation program causes a computer to execute processing of: obtaining data including a plurality of nodes and a plurality of edges connecting the plurality of nodes; selecting a first edge from the plurality of edges; and generating new data having a second connection relationship between the plurality of nodes different from a first connection relationship between the plurality of nodes of the data by changing connection of the first edge such that a third node connected to at least one of a first node and a second node located at both ends of the first edge via a number of edges, the number being equal to or less than a threshold, is located at one end of the first edge.

### ADVANTAGEOUS EFFECTS OF INVENTION

It is possible to reduce generation of neighborhood data with an impaired feature of original graph data.

### BRIEF DESCRIPTION OF DRAWINGS

FIG. 1 is a block diagram illustrating an example of a functional configuration of a server device according to a first embodiment.
FIG. 2 is a diagram schematically illustrating a LIME algorithm.
FIG. 3 is a diagram illustrating an example of neighborhood data.
FIG. 4 is a diagram illustrating an example of neighborhood data.
FIG. 5 is a diagram illustrating an example of a method of generating neighborhood data.
FIG. 6 is a diagram illustrating failure cases in neighborhood data generation.
FIG. 7 is a diagram illustrating a specific example of neighborhood data generation.
FIG. 8 is a diagram illustrating a specific example of neighborhood data generation.
FIG. 9 is a flowchart illustrating a procedure of data generation processing according to the first embodiment.
FIG. 10 is a diagram illustrating a hardware configuration example of a computer.

### DESCRIPTION OF EMBODIMENTS

A data generation program, a data generation method, and a data generation device according to the present application will be described below with reference to the accompanying drawings. Note that these embodiments do not limit the disclosed technique. Then, each of the embodiments may be appropriately combined within a range without causing contradiction between processing contents.

### [First Embodiment]

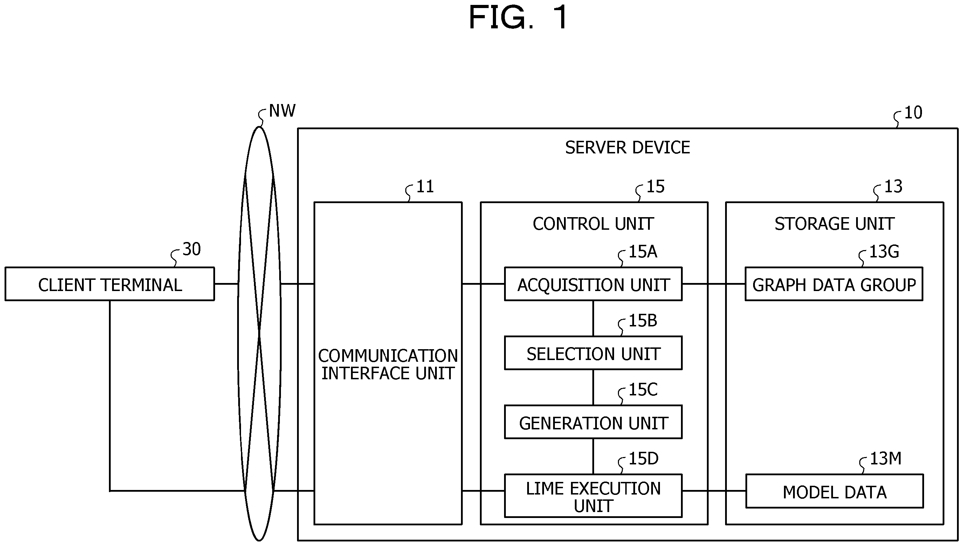

FIG. 1 is a block diagram illustrating an example of a functional configuration of a server device 10 according to a first embodiment. As one aspect, a system 1 illustrated in FIG. 1 provides a data generation function that generates neighborhood data to be used to generate a LIME linear regression model from original graph data to be explained. Note that, although FIG. 1 illustrates an example in which the above-described data generation function is provided by a client-server system, the present embodiment is not limited to this example, and the above-described data generation function may be provided in a standalone manner.

As illustrated in FIG. 1, the system 1 may include the server device 10 and a client terminal 30. The server device 10 and the client terminal 30 are communicably connected with each other via a network NW. For example, the network NW may be any type of communication network such as the Internet or a local area network (LAN) regardless of whether the network NW is wired or wireless.

The server device 10 is an example of a computer that provides the above-described data generation function. The server device 10 may correspond to an example of a data generation device. As one embodiment, the server device 10 can be implemented by installing a data generation program that achieves the above-described data generation function to any computer. For example, the server device 10 can be implemented as a server that provides the above-described data generation function on-premises. In addition, the server device 10 may provide the above-described data generation function as a cloud service by being implemented as a software as a service (SaaS)-type application.

The client terminal 30 is an example of a computer that receives the provision of the above-described data generation function. For example, a desktop-type computer such as a personal computer, or the like may correspond to the client terminal 30. This is merely an example, and the client terminal 30 may be any computer such as a laptop-type computer, a mobile terminal device, or a wearable terminal.

As described in the above background art, in LIME, when explaining a classification result output by a machine learning model f to which data x is input, a linear regression model g whose output locally approximates the output of the machine learning model f in the vicinity of the data x is generated as an interpretable model for the machine learning model f.

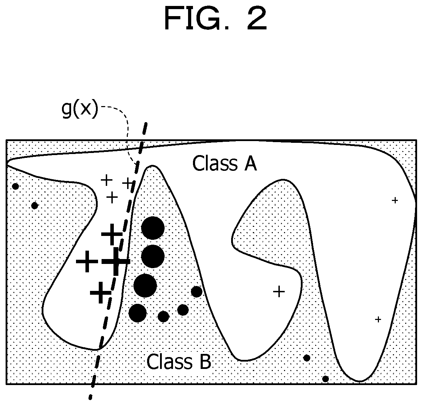

FIG. 2 is a diagram schematically illustrating a LIME algorithm. FIG. 2 schematically illustrates a two-dimensional feature amount space as an example only. Moreover, FIG. 2 illustrates an area corresponding to class A in the two-dimensional feature amount space by a white background, and an area corresponding to class B by hatching. Moreover, FIG. 2 illustrates the original data x by the bold "+". Moreover, while FIG. 2 illustrates neighborhood data z whose label is the class A obtained by inputting the neighborhood data z obtained from the original data x to the machine learning model f by "+", FIG. 2 illustrates the neighborhood data z whose label is the class B by "•". Moreover, in FIG. 2, a sample weight πₓ obtained by inputting the original data x and the neighborhood data z to a distance function D(x, z) and a kernel function πₓ(z) is expressed as the magnitude of "+" or "•". Moreover, FIG. 2 illustrates a regression line g(x) of the linear regression model approximated by the machine learning model f by the broken line.

As an example only, in the LIME algorithm, the output of the machine learning model f is explained according to the procedure of steps S1 to S6 below.
S1: Generation of the neighborhood data z
S2: Input of the neighborhood data z to the machine learning model f
S3: Calculation of a distance D
S4: Calculation of the sample weight πₓ
S5: Generation of the linear regression model g
S6: Calculation of partial regression coefficients

Specifically, by varying part of the feature amount of the data x, which is an original input instance, the neighborhood data z is generated with a specific number of samples, for example, on a scale of 100 to 10000 (step S1). By inputting the neighborhood data z generated in this way to the machine learning model f to be explained, the output of the machine learning model f is obtained (step S2). For example, in a case where a task is class classification, the machine learning model outputs a predicted probability for each class. Furthermore, in a case where the task is regression, a predicted value corresponding to a numerical value is output. Thereafter, the distance D is obtained by inputting the original data x and the neighborhood data z to the distance function D(x, z), such as cos similarity or L2 norm, for example (step S3). Next, the sample weight πₓ is obtained by inputting the distance D obtained in step S3 to the kernel function πₓ(z) (step S4). Then, the linear regression model g is generated by approximating the linear regression model using the feature amount of the neighborhood data as an explanatory variable and the output of the neighborhood data as an objective variable (step S5). For example, in Ridge regression, an objective function ξ(x) for obtaining the linear regression model g is solved, the linear regression model g minimizing a sum of a loss function L(f, g, πₓ) for the output of the machine learning model f and the linear regression model g and complexity Ω(g) of the linear regression model g in the vicinity of the data x. Thereafter, by calculating a partial regression coefficient of the linear regression model g, contribution of the feature amount to the output of the machine learning model f is output (step S6).

The contribution of the feature amount output in step S6 is useful in an aspect of analyzing the reasons and grounds for the output of the machine learning model. For example, it is possible to identify whether a trained machine learning model obtained by executing machine learning is a poor machine learning model generated due to bias in training data or the like. This will suppress poor machine learning models from being used in mission-critical areas. Furthermore, in a case where there is an error in the output of the trained machine learning model, the reasons and grounds for the error can be presented. As another aspect, the contribution of the feature amount output in step S6 is useful in that machine learning models with different formats of the machine learning models and data, or structures of the machine learning models can be compared to each other using the same rules. For example, it is possible to select a machine learning model, such as which trained machine learning model is essentially superior among a plurality of trained machine learning models prepared for the same task.

Here, as described in the background art above, LIME only exposes application programming interfaces (APIs) of libraries that support data in formats such as tables, images, and texts as data formats capable of generating neighborhood data.

Therefore, in a case of generating neighborhood data of graph data, neighborhood data with an impaired feature of the original graph data is sometimes generated. Even with such neighborhood data, it is difficult to generate a linear regression model that approximates the machine learning model to be explained, which hinders application of LIME to a machine learning model using graph data as input.

For example, examples of the machine learning model using graph data as input include a graph neural network (GNN), a graph kernel function, and the like, but it is difficult to apply LIME to these GNN model, graph kernel model, and the like. Of these GNN model and graph kernel model, it is conceivable to apply GNNExplainer, which outputs the contribution of each edge of the graph input to the GNN model to the output of the GNN model, to the GNN model. However, since GNNExplainer is a technique specialized for GNN models, it is difficult to apply GNNExplainer to graph kernel models and other machine learning models. GNNExplainer, which limits applicable tasks, cannot become a standard under the current circumstances where machine learning models with decisively high performance in every task are not present.

From the above, the data generation function according to the present embodiment achieves reduction in generation of neighborhood data with an impaired feature of the original graph data from the aspect of achieving extension of LIME applicable also to the machine learning model using graph data as input.

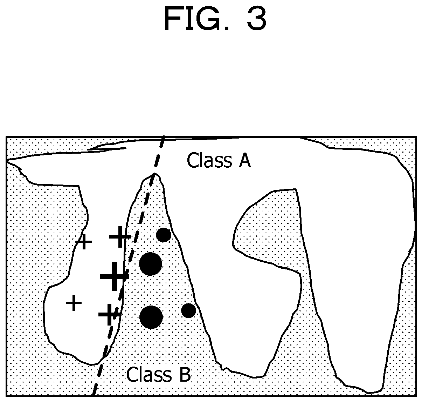

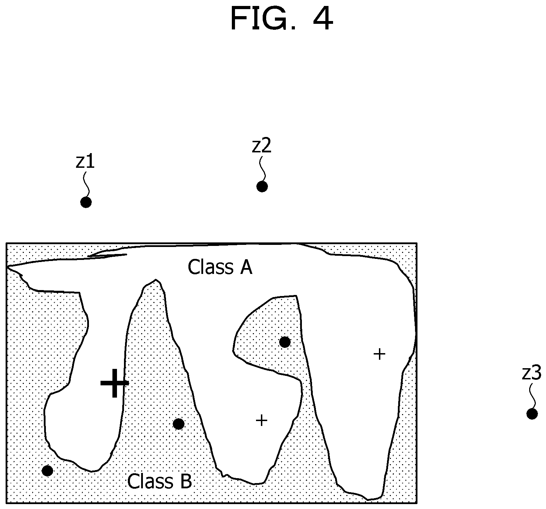

FIGs. 3 and 4 are diagrams illustrating examples of neighborhood data. FIGs. 3 and 4 illustrate the two-dimensional feature amount space illustrated in FIG. 2. Moreover, while FIG. 3 illustrates the neighborhood data z that is desirable for generating the linear regression model g, FIG. 4 illustrates the neighborhood data z that is undesirable for generating the linear regression model g. The neighborhood data z illustrated in FIG. 3 is data assumed to be input to the machine learning model f, for example, data similar to the training data used during training of the machine learning model f. Moreover, a ratio of the neighborhood data z distributed in the neighborhood of the original data x is also high. Such neighborhood data z is suitable for generating the linear regression model g because it is easy to distinguish a classification boundary between the class A and the class B in the neighborhood of the original data x. Meanwhile, the neighborhood data z illustrated in FIG. 4 includes data not assumed to be input to the machine learning model f, for example, data dissimilar to the training data used during training of the machine learning model f, as exemplified by the neighborhood data z1, z2, and z3. Moreover, a ratio of the neighborhood data z distributed in the neighborhood of the original data x is also low. Such neighborhood data z is not suitable for generating the linear regression model g because it is less easy to distinguish the classification boundary between the class A and the class B in the neighborhood of the original data x.

It is possible to generate the neighborhood data z illustrated in FIG. 3 for data in formats of tables, images, and texts supported by an API of LIME. Meanwhile, it is difficult to generate the neighborhood data z illustrated in FIG. 3 from graph data not supported by an API of LIME, and it may not be possible to suppress generation of the neighborhood data z illustrated in FIG. 4.

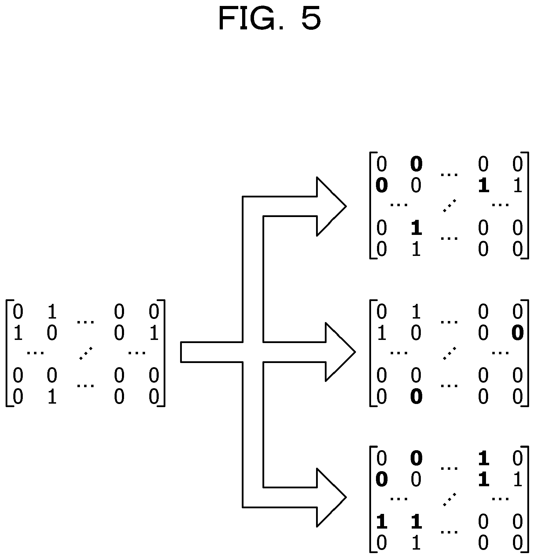

FIG. 5 is a diagram illustrating an example of a method of generating the neighborhood data z. FIG. 5 illustrates adjacency matrices as a mere example of a method of expressing graph data. As illustrated in FIG. 5, in a case of regarding elements of an adjacency matrix as feature amounts and applying an API of LIME for tabular data, it is possible to create an adjacency matrix different from the original adjacency matrix by randomly inverting 0 or 1 values of the elements of the adjacency matrix.

In the case of applying an API of LIME for other data formats to graph data in this way, there is a possibility that data with an impaired feature of the original graph is generated, and it is difficult to call these data neighborhood data.

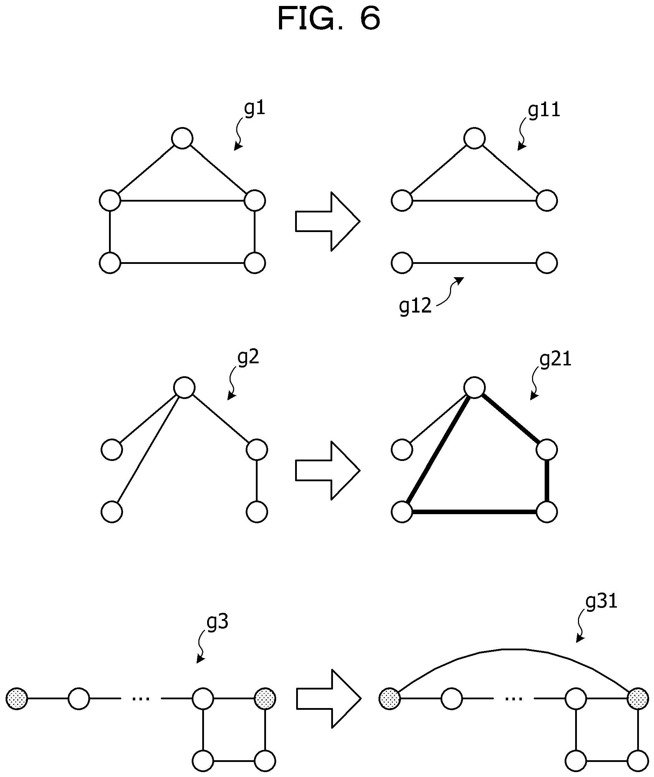

FIG. 6 is a diagram illustrating failure cases in neighborhood data generation. FIG. 6 illustrates failure cases where the features of the original graph are impaired due to the application of an API of LIME for tabular data to graph data. For example, in the example of graph g1 illustrated in FIG. 6, connectivity of the graph g1 is impaired in a case where graph g11 is generated from the graph g1 by applying the API of LIME. The graph g11 with the impaired connectivity in this way becomes an irregular instance for a machine learning model that assumes only input of a connected graph. For example, in a case of a trained machine learning model that takes a molecular structure of a compound as input and outputs a label of the molecule, two graph data that cannot be training data will be input if the connectivity of graph data as input is impaired. Furthermore, in the example of graph g2 illustrated in FIG. 6, a tree structure of the graph g2 cannot be maintained in a case where graph g21 is generated from the graph g2 by applying the API of LIME. The graph g21, which no longer has a tree structure, is an irregular instance for a machine learning model that assumes only a tree structure. Moreover, in the example of graph g3 illustrated in FIG. 6, a graph g31 is generated in which two hatched nodes among nodes of the graph g3 are connected by an edge by applying the API of LIME. Therefore, in the graph g31, the distance between the two hatched nodes is drastically reduced. It is difficult to say that the graph g31 in which the distance between the nodes is drastically reduced in this way is neighborhood data of the graph g1.

A functional configuration of the server device 10 having the data generation function capable of reducing generation of neighborhood data with an impaired feature of the original graph data in this way will be described. In FIG. 1, blocks corresponding to functions of the server device 10 are schematically illustrated. As illustrated in FIG. 1, the server device 10 includes a communication interface unit 11, a storage unit 13, and a control unit 15. Note that FIG. 1 merely illustrates an excerpt of functional units related to the above-described data generation function. A functional unit other than the illustrated ones, for example, a functional unit that an existing computer is equipped with by default or as an option may be provided in the server device 10.

The communication interface unit 11 corresponds to an example of a communication control unit that controls communication with another device, for example, the client terminal 30. Merely as an example, the communication interface unit 11 is achieved by a network interface card such as a LAN card. For example, the communication interface unit 11 receives a request from the client terminal 30 regarding generation of neighborhood data or execution of an LIME algorithm. Furthermore, the communication interface unit 11 outputs the neighborhood data and contribution of the feature amount that is an execution result of the LIME algorithm to the client terminal 30.

The storage unit 13 is a functional unit that stores various types of data. As merely an example, the storage unit 13 is achieved by a storage, for example, an internal, external, or auxiliary storage. For example, the storage unit 13 stores a graph data group 13G and model data 13M. In addition to the graph data group 13G and the model data 13M, the storage unit 13 can store various data such as account information of users who receive the above-described data generation function.

The graph data group 13G is a set of data including a plurality of nodes and a plurality of edges connecting the plurality of nodes. For example, the graph data included in the graph data group 13G may be training data to be used when training a machine learning model, or input data to be input to a trained machine learning model. Furthermore, the graph data included in the graph data group 13G may be in any format such as an adjacency matrix or a tensor.

The model data 13M is data related to the machine learning model. For example, in a case where the machine learning machine learning model is a neural network, the machine learning model data 13M may include parameters of the machine learning model such as a weight and a bias of each layer, including a layer structure of the machine learning model such as neurons and synapses of each layer including an input layer, a hidden layer, and an output layer that form the machine learning model. Note that, while at a stage before machine learning of the model is executed, parameters that are initially set by a random number are stored, at a stage after the machine learning of the model is executed, trained parameters are saved, as an example of the parameters of the machine learning model.

The control unit 15 is a processing unit that controls the entire server device 10. For example, the control unit 15 is achieved by a hardware processor. As illustrated in FIG. 1, the control unit 15 has an acquisition unit 15A, a selection unit 15B, a generation unit 15C, and a LIME execution unit 15D.

The acquisition unit 15A acquires the original graph data. As merely an example, the acquisition unit 15A can start processing in a case of receiving a request from the client terminal 30 regarding generation of the neighborhood data or execution of the LIME algorithm. At this time, the acquisition unit 15A can receive, via the client terminal 30, the original graph data to be explained and specification of the machine learning model. In addition, the acquisition unit 15A can also automatically select data from output of the machine learning model being trained or already trained, for example, training data or input data with incorrect labels or numerical values. After the original graph data and the machine learning model to be acquired are thus identified, the acquisition unit 15A acquires the original graph data to be acquired of the graph data group 13G and the machine learning model to be acquired of the model data 13M stored in the storage unit 13.

The selection unit 15B selects a first edge from the plurality of edges included in the original graph data. The "first edge" referred to here refers to an edge to be changed among the plurality of edges included in the original graph data. As one aspect, the selection unit 15B selects a first edge e from the original graph G in the case where the original graph data is acquired. Thereafter, every time the first edge e is changed, that is, deleted and rearranged, the selection unit 15B reselects the first edge e from the new graph G after the change of the first edge e until the number of changes of the first edge e reaches a threshold. Such a threshold is determined by, as an example, designation from the client terminal 30, setting performed by the client terminal 30, or system setting performed by a developer of the above-described data generation function, or the like. As merely an example, the threshold can be set to about 1 to 5 in a case where the original graph is a graph having 10 edges. At this time, while the larger the above threshold is, the more likely the neighborhood data with a larger distance from the original graph is generated, the smaller the above threshold is, the more likely the neighborhood data with a smaller distance from the original graph is generated.

The generation unit 15C changes connection of the first edge such that a third node is located at one end of the first edge, the third node being connected to at least one of a first node and a second node located at both ends of the first edge via the number of edges, the number being equal to or less than the threshold. Thereby, new graph data having a second connection relationship between a plurality of nodes different from a first connection relationship between the plurality of nodes of the original graph data is generated.

As an embodiment, the generation unit 15C creates a subgraph P included in a range from at least one of the first node and the second node located at both ends of the first edge e to a maximum of n (natural number)-hop. Next, the generation unit 15C deletes the first edge e in the subgraph P. The generation unit 15C then groups the nodes that are connected with each other in the subgraph P after the deletion of the first edge e. Thereafter, the generation unit 15C determines whether or not the subgraph P has a plurality of groups.

Here, in a case where the subgraph P has a plurality of groups, it can be identified that the subgraph P has changed from a connected graph to a non-connected graph. In this case, the generation unit 15C selects nodes that connect each other from the subgraphs P divided into two groups, and rearranges the first edge e between the nodes. Meanwhile, in a case where the subgraph P does not have a plurality of groups, it can be identified that the subgraph P has not changed from a connected graph to a non-connected graph, and that the subgraph P still has one group. In this case, the generation unit 15C rearranges the first edge e in the subgraph P at random. Note that, at the time of rearranging the first edge, a constraint that prohibits rearrangement of the first edge e between the same nodes as between the nodes from which the first edge e has been deleted.

After such manipulation of the subgraph P is completed, the generation unit 15C changes, that is, deletes and rearranges the first edge e on the original graph G or on the graph G, thereby creating the new graph G after the change of the first edge e. At this time, when the number of changes of the first edge e reaches the threshold, one neighborhood data z is completed.

In the description so far, an example of generating one neighborhood data z has been given, but generation of the neighborhood data can be repeated until a specific number of samples, for example, a set of 100 to 10000 neighborhood data Z is generated. For example, in the case where the original graph is a graph having 10 edges, the generation of the neighborhood data z is repeated a specified number of times for each of the thresholds "1" to "5" while incrementing the threshold by one from "1" to "5". Thereby, the neighborhood data of the target number of samples may be generated.

The LIME execution unit 15D executes the LIME algorithm. As one embodiment, the LIME execution unit 15D acquires the neighborhood data z generated by the generation unit 15C. As a result, the processing of S1 out of S1 to S6 described with reference to FIG. 2 can be omitted. Thereafter, the LIME execution unit 15D transmits the contribution of each feature amount to the client terminal 30 after executing the processing of S1 out of S2 to S6 described with reference to FIG. 2. Note that, here, an example in which the control unit 15 executes LIME software in which a module corresponding to the data generation function is packaged has been given, but the data generation function does not necessarily have to be packaged in the LIME software. For example, the neighborhood data z generated by the generation unit 15C may be output to an external device, service, or software that executes the LIME algorithm.

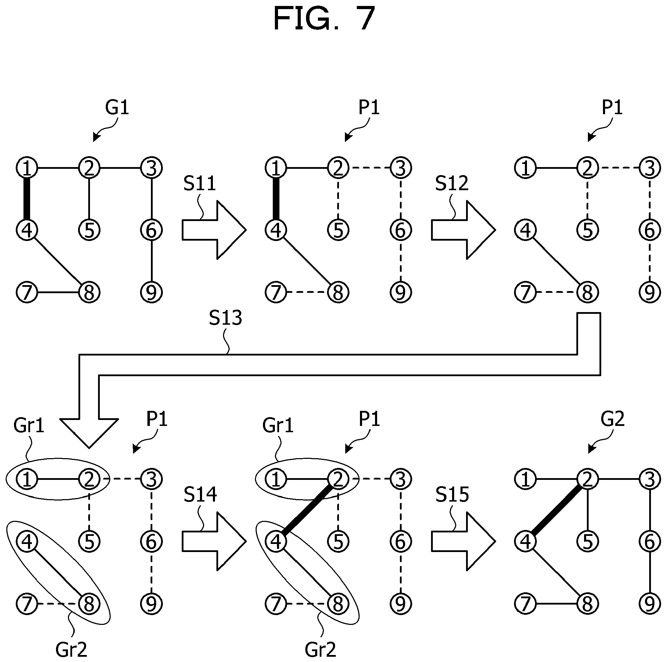

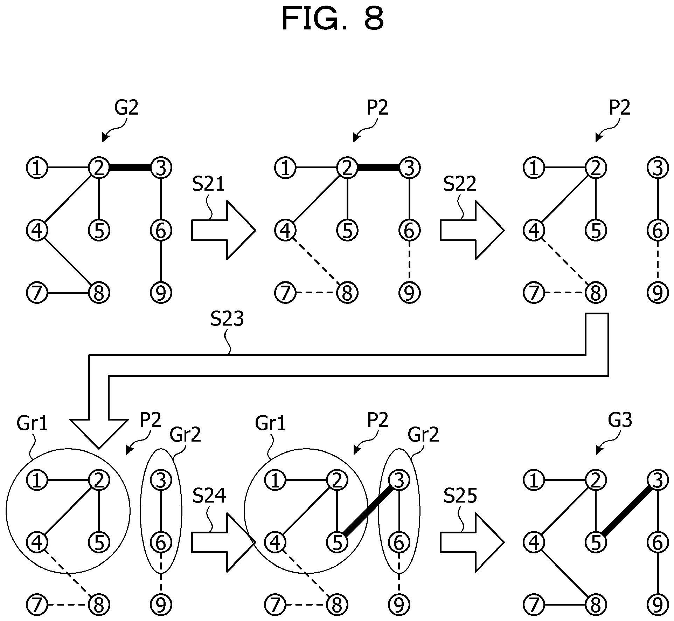

Next, a specific example of the neighborhood data z generation will be described. FIGs. 7 and 8 are diagrams illustrating specific examples of the neighborhood data z generation. FIGs. 7 and 8 illustrate, as merely an example, examples of generating one neighborhood data z by changing two of eight edges included in the original graph. Moreover, in FIGs. 7 and 8, the nodes are illustrated in circles, and numbers for identifying the nodes are entered in the circles. Moreover, in FIGs. 7 and 8, while the edges included in the subgraphs are illustrated by the solid lines, the edges not included in the subgraphs are illustrated by the broken lines. Moreover, in FIG. 7 the first edge e, which undergoes the first change, that is, deletion and rearrangement, is illustrated in bold, and in FIG. 8, the first edge e, which undergoes the second change, that is, deletion and rearrangement, is illustrated in bold. Note that, in FIGs. 7 and 8, description will be given on the assumption that the number of hops for searching the range for creating the subgraph P is n = 1.

First, in the first change, as illustrated in FIG. 7, the edge connecting node "1" and node "4" is selected as the first edge e from the original graph G1. In this case, a subgraph P1 that is included in the range from at least one of the node "1" and "4" located at both ends of the first edge e to a maximum of 1 hop is created (step S11). Such a subgraph P1 includes the range from the node "1" located at one end of the first edge e to node "2" one hop away, and the range from the node "4" located at the other end of the first edge e to node "8" one hop away.

Thereafter, the first edge e is deleted within the subgraph P1 (step S12). Subsequently, the nodes connected with each other in the subgraph P1 after the deletion of the first edge e are grouped (step S13). In this case, the node "1" and the node "2" are grouped as group Gr1, and the node "4" and the node "8" are grouped as group Gr2.

Here, the subgraph P1 has the plurality of groups Gr1 and Gr2. In this case, nodes that connect each other are selected from the subgraphs P1 divided into the two groups Gr1 and Gr2, and the first edge e is rearranged between the nodes (step S14). For example, the node "2" and node "4", which are not the same as between the node "1" and the node "4" where the deletion of the first edge e has been performed, and which connects the group Gr1 and the group Gr2, are selected. Then, the first edge e is rearranged between the node "2" and the node "4".

After the manipulation of the subgraph P1 is completed, the first edge e connecting the node "1" and the node "4" on the original graph G1 is deleted and the first edge e connecting the node "2" and the node "4" is rearranged. By executing the deletion and rearrangement of the first edge e in this way, a new graph G2 after the change of the first edge e is obtained.

Next, in the second change, as illustrated in FIG. 8, the edge connecting the node "2" and node "3" is selected as the first edge e from the new graph G2. In this case, a subgraph P2 that is included in the range from at least one of the node "2" and "3" located at both ends of the first edge e to a maximum of 1 hop is created (step S21). Such a subgraph P2 includes the range from the node "2" located at one end of the first edge e to the nodes "1", "4", and "5" one hop away, and the range from the node "3" located at the other end of the first edge e to node "6" one hop away.

Thereafter, the first edge e is deleted within the subgraph P2 (step S22). Subsequently, the nodes connected with each other in the subgraph P2 after the deletion of the first edge e are grouped (step S23). In this case, the node "1", the node "2", the node "4", and the node "5" are grouped as group Gr1, and the node "3" and the node "6" are grouped as group Gr2.

Here, the subgraph P2 has the plurality of groups Gr1 and Gr2. In this case, nodes that connect each other are selected from the subgraphs P2 divided into the two groups Gr1 and Gr2, and the first edge e is rearranged between the nodes (step S24). For example, the node "3" and node "5", which are not the same as between the node "2" and the node "3" where the deletion of the first edge e has been performed, and which connects the group Gr1 and the group Gr2, are selected. Then, the first edge e is rearranged between the node "3" and the node "5".

After the manipulation of the subgraph P2 is completed, the first edge e connecting the node "2" and the node "3" on the new graph G2 is deleted and the first edge e connecting the node "3" and the node "5" is rearranged (step S25). Thereby, the number of changes of the first edge e reaches the threshold "2" in this example, so a new graph G3 is completed as neighborhood data G3.

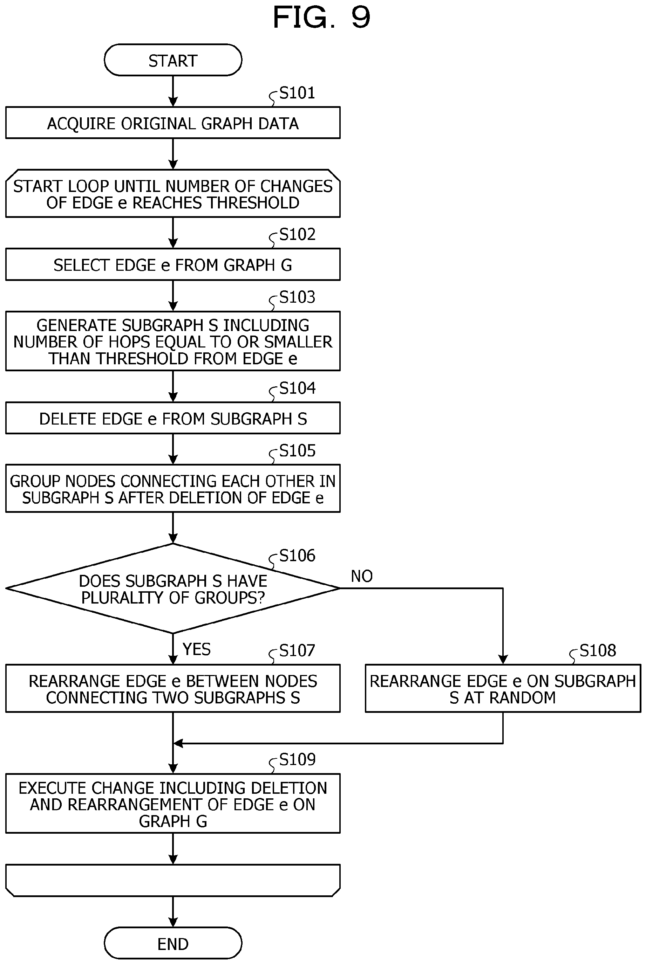

Next, a flow of processing of the server device 10 according to the present embodiment will be described. FIG. 9 is a flowchart of a procedure of data generation processing according to the first embodiment. As merely an example, this processing can be started in the case of receiving a request from the client terminal 30 regarding generation of the neighborhood data or execution of the LIME algorithm.

As illustrated in FIG. 9, the acquisition unit 15A acquires the original graph data (step S101). Thereafter, processing from step S102 to step S109 below is repeated until the number of changes of the first edge e reaches the threshold.

In other words, the selection unit 15B selects the first edge e from the original graph G or the new graph G (step S102). Next, the generation unit 15C creates the subgraph P included in the range from at least one of the first node and the second node located at both ends of the first edge e to a maximum of n (natural number)-hop (step S103).

Thereafter, the generation unit 15C deletes the first edge e in the subgraph P (step S104). The generation unit 15C then groups the nodes that are connected with each other in the subgraph P after the deletion of the first edge e (step S105). Thereafter, the generation unit 15C determines whether or not the subgraph P has a plurality of groups (step S106).

Here, in the case where the subgraph P has a plurality of groups (step S106 Yes), it can be identified that the subgraph P has changed from a connected graph to a non-connected graph. In this case, the generation unit 15C selects nodes that connect each other from the subgraphs P divided into two groups, and rearranges the first edge e between the nodes (step S107).

Meanwhile, in the case where the subgraph P does not have a plurality of groups (step S106 No), it can be identified that the subgraph P has not changed from a connected graph to a non-connected graph, and that the subgraph P still has one group. In this case, generation unit 15C rearranges the first edge e in the subgraph P at random (step S108).

After such manipulation of the subgraph P is completed, the generation unit 15C changes, that is, deletes and rearranges the first edge e on the original graph G or on the graph G (step S109). Thereby, the new graph G after the change of the first edge e can be obtained. At this time, when the number of changes of the first edge e reaches the threshold, one neighborhood data z is completed.

As described above, the data generation function according to the present embodiment selects one edge from the original graph, and changes the edge to the edge being selected for the connection between the node at one end of the edge being selected and the node located at the number of hops that is equal to or smaller than the threshold away from one of the both ends of the edge being selected. Therefore, it is possible to maintain the connectivity, maintain the tree structure, and suppress drastic changes in the distance between nodes. Therefore, according to the data generation function of the present embodiment, it is possible to reduce generation of neighborhood data with an impaired feature of original graph data.

### [Second Embodiment]

Incidentally, while the embodiment relating to the disclosed device has been described above, the present invention may be carried out in a variety of different modes apart from the embodiment described above. Thus, hereinafter, another embodiment included in the present invention will be described.

Furthermore, each of the illustrated configuration elements in each of the devices does not necessarily have to be physically configured as illustrated in the drawings. In other words, specific modes of distribution and integration of the devices are not limited to those illustrated, and all or a part of the devices may be configured by being functionally or physically distributed and integrated in an optional unit depending on various loads, use situations, and the like. For example, the acquisition unit 15A, the selection unit 15B, or the generation unit 15C may be connected as an external device of the server device 10 via a network. Furthermore, the acquisition unit 15A, the selection unit 15B, and the generation unit 15C may be respectively included in different devices, and connected to a network and operate in cooperation with one another, so that the functions of the server device 10 described above may be achieved.

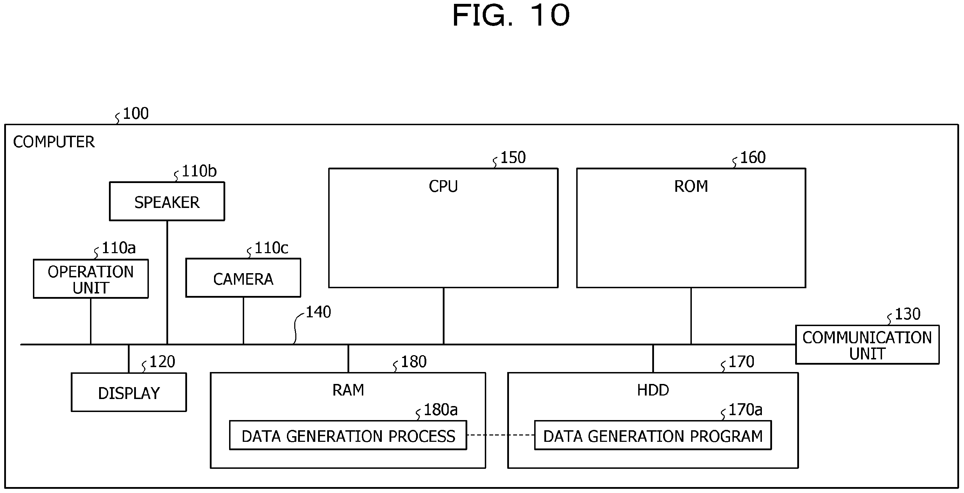

Furthermore, various sorts of processing described in the above embodiments may be achieved by executing a program prepared in advance on a computer such as a personal computer or a workstation. Thus, hereinafter, an example of a computer that executes a data generation program having functions similar to those in the first and second embodiments will be described with reference to FIG. 10.

FIG. 10 is a diagram illustrating a hardware configuration example of a computer. As illustrated in FIG. 10, a computer 100 includes an operation unit 110a, a speaker 110b, a camera 110c, a display 120, and a communication unit 130. Moreover, this computer 100 includes a CPU 150, a ROM 160, an HDD 170, and a RAM 180. These respective units 110 to 180 are connected via a bus 140.

As illustrated in FIG. 10, the HDD 170 stores a data generation program 170a that exhibits functions similar to the functions of the acquisition unit 15A, the selection unit 15B, and the generation unit 15C described in the above-described first embodiment. The data generation program 170a may be integrated or separated in a similar manner to each of the configuration elements of the acquisition unit 15A, the selection unit 15B, and the generation unit 15C illustrated in FIG. 1. In other words, all pieces of data indicated in the above first embodiment do not necessarily have to be stored in the HDD 170, and it is sufficient that data for use in processing is stored in the HDD 170.

Under such an environment, the CPU 150 reads the data generation program 170a from the HDD 170 and then loads the read data generation program 170a into the RAM 180. As a result, the data generation program 170a functions as a data generation process 180a as illustrated in FIG. 10. This data generation process 180a loads various sorts of data read from the HDD 170 into an area assigned to the data generation process 180a in the storage area included in the RAM 180 and executes various sorts of processing, using these various sorts of loaded data. For example, as an example of the processing executed by the data generation process 180a, the processing illustrated in FIG. 9 or the like is included. Note that all the processing units indicated in the above first embodiment do not necessarily have to work in the CPU 150, and it is sufficient that a processing unit corresponding to processing to be executed is virtually achieved.

Note that the data generation program 170a described above does not necessarily have to be stored in the HDD 170 or the ROM 160 from the beginning. For example, each program is stored in a "portable physical medium" such as a flexible disk, which is a so-called FD, a compact disc read only memory (CD-ROM), a digital versatile disc (DVD), a magneto-optical disk, or an integrated circuit (IC) card to be inserted into the computer 100. Then, the computer 100 may acquire each program from these portable physical media to execute each acquired program. Furthermore, each program may be stored in another computer, server device, or the like connected to the computer 100 via a public line, the Internet, a local area network (LAN), a wide area network (WAN), or the like, and the computer 100 may acquire each program from these other computer and server device to execute each acquired program.

### CITATION LIST

### NON-PATENT DOCUMENT

Non-Patent Document 1: Marco Tulio Ribeiro, Sameer Singh, Carlos Guestrin "Why Should I Trust You?" Explaining the Predictions of Any Classifier

### REFERENCE SIGNS LIST

10 Server device
11 Communication interface unit
13 Storage unit
13G Graph data group
13M Model data
15 Control unit
15A Acquisition unit
15B Selection unit
15C Generation unit
15D LIME execution unit
30 Client terminal

## Claims

1. A data generation program causes a computer to execute processing of:
obtaining data including a plurality of nodes and a plurality of edges connecting the plurality of nodes;
selecting a first edge from the plurality of edges; and
generating new data having a second connection relationship between the plurality of nodes different from a first connection relationship between the plurality of nodes of the data by changing connection of the first edge such that a third node connected to at least one of a first node and a second node located at both ends of the first edge via a number of edges, the number being equal to or less than a threshold, is located at one end of the first edge.

2. The data generation program according to claim 1, wherein
the generating includes processing of generating new data that has a third connection relationship between the plurality of nodes different from the first connection relationship between the plurality of nodes of the data by changing connection of the first edge such that a fourth node connected to at least one of the first node and the second node located at the both ends of the first edge via a number of edges, the number being equal to or less than the threshold, is located at the other end of the first edge.

3. The data generation program according to claim 2, wherein
both the first connection relationship and the second connection relationship have connectivity.

4. The data generation program according to claim 2, wherein
the selecting includes processing of selecting a new first edge from a plurality of edges included in the new data each time the new data is generated until the number of times the connection is changed in the processing of generating reaches a threshold.

5. The data generation program according to claim 2, wherein
the new data is used to generate an approximate model that describes an inference result of a machine learning model that performs inference using the data as input.

6. A data generation method implemented by a computer, the data generation method comprising:
obtaining data that includes a plurality of nodes and a plurality of edges connecting the plurality of nodes;
selecting a first edge from the plurality of edges; and
generating new data that has a second connection relationship between the plurality of nodes different from a first connection relationship between the plurality of nodes of the data by changing connection of the first edge such that a third node connected to at least one of a first node and a second node located at both ends of the first edge via a number of edges, the number being equal to or less than a threshold, is located at one end of the first edge.

7. The data generation method according to claim 6, wherein
the generating includes processing of generating new data that has a third connection relationship between the plurality of nodes different from the first connection relationship between the plurality of nodes of the data by changing connection of the first edge such that a fourth node connected to at least one of the first node and the second node located at the both ends of the first edge via a number of edges, the number being equal to or less than the threshold, is located at the other end of the first edge.

8. The data generation method according to claim 7, wherein
both the first connection relationship and the second connection relationship have connectivity.

9. The data generation method according to claim 7, wherein
the selecting includes processing of selecting a new first edge from a plurality of edges included in the new data each time the new data is generated until the number of times the connection is changed in the processing of generating reaches a threshold.

10. The data generation method according to claim 7, wherein
the new data is used to generate an approximate model that describes an inference result of a machine learning model that performs inference using the data as input.

11. A data generation device comprising:
a control unit configured to execute processing of:
obtaining data that includes a plurality of nodes and a plurality of edges connecting the plurality of nodes;
selecting a first edge from the plurality of edges; and
generating new data that has a second connection relationship between the plurality of nodes different from a first connection relationship between the plurality of nodes of the data by changing connection of the first edge such that a third node connected to at least one of a first node and a second node located at both ends of the first edge via a number of edges, the number being equal to or less than a threshold, is located at one end of the first edge.

12. The data generation device according to claim 11, wherein
the generating includes processing of generating new data that has a third connection relationship between the plurality of nodes different from the first connection relationship between the plurality of nodes of the data by changing connection of the first edge such that a fourth node connected to at least one of the first node and the second node located at the both ends of the first edge via a number of edges, the number being equal to or less than the threshold, is located at the other end of the first edge.

13. The data generation device according to claim 12, wherein
both the first connection relationship and the second connection relationship have connectivity.

14. The data generation device according to claim 12, wherein
the selecting includes processing of selecting a new first edge from a plurality of edges included in the new data each time the new data is generated until the number of times the connection is changed in the processing of generating reaches a threshold.

15. The data generation device according to claim 12, wherein
the new data is used to generate an approximate model that describes an inference result of a machine learning model that performs inference using the data as input.
